# EUROPÄISCHE PATENTSCHRIFT

(11) **EP 2 686 612 B1**
(45) Veröffentlichungstag und Bekanntmachung des Hinweises auf die Patenterteilung: **11.03.2015**
(21) Anmeldenummer: 12702960.1
(22) Anmeldetag: 27.01.2012
(51) Int. Cl.: F23J 15/00

(54) **REDUKTIONSMITTELEINSPRITZDÜSE UND VERFAHREN**
REDUCING AGENT INJECTION NOZZLE AND METHOD
INJECTEUR D'AGENT DE RÉDUCTION ET PROCÉDÉ

(30) Priorität: 15.03.2011 DE 102011014026
(43) Veröffentlichungstag der Anmeldung: 22.01.2014
(73) Patentinhaber: Albonair GmbH, 44263 Dortmund (DE)
(72) Erfinder: OVERHOFF, Werner, 45772 Marl (DE); DOLENEC, Sascha, 59439 Holzwickede (DE); MÜHLENBROCK, Sebastian, 45711 Datteln (DE)
(74) Vertreter: Patentanwaltskanzlei Methling
(86) Internationale Anmeldenummer: PCT/EP2012/000373
(87) Internationale Veröffentlichungsnummer: WO 2012/123051

(56) Entgegenhaltungen:
- WO-A1-2004/047963
- DE-C1- 19 819 579
- US-A1- 2010 115 932

## Beschreibung

Die Erfindung betrifft eine Einspritzdüse zur Einspritzung eines Reduktionsmittels in einem Abgassystem einer Verbrennungskraftmaschine zur selektiven katalytischen Reduktion, insbesondere zur Zerstäubung mittels Druckluft oder Treibgas, wobei die Düse einen Düsenkörper und zumindest eine Austrittsöffnung aufweist, wobei die Düse stromauf der Austrittsöffnung ein veränderliches Volumen aufweist, welches nach Beendigung der Einspritzung der Flüssigkeit vergrößert wird, um Gas aus der Umgebung durch die Austrittsöffnung in die Düse einzuziehen.

Eine derartige Einspritzdüse ist aus der US 2010/115932 A1 bekannt.

Weiter betrifft die Erfindung ein Verfahren zum Betrieb eines Abgasnachbehandlungssystems mit einer Einspritzdüse mit zumindest einer Austrittsöffnung zur Einspritzung eines Reduktionsmittels in einen Abgasstrom einer Verbrennungskraftmaschine zur selektiven katalytischen Reduktion.

Derartige Einspritzdüsen sind bekannt und kommen zum Einsatz in Dosiersystemen zur Einspritzung eines Reduktionsmittels, wie einer Harnstofflösung, insbesondere gemäß DIN 70070, in den Abgasstrom einer Verbrennungskraftmaschine. Dosiersysteme zur Einbringung eines Reduktionsmittels in den Abgasstrom zur selektiven katalytischen Reduktion von Stickoxyden (engl. selective catalytic reduction, SCR) werden zur Minimierung der Stickoxydemissionen von Verbrennungskraftmaschinen eingesetzt. Hierzu wird ein Reduktionsmittel in das Abgassystem mit einer Dosiervorrichtung eingedüst. Als Reduktionsmittel dient Ammoniak. Unter Reduktionsmittel bzw. Harnstofflösung soll in diesem Sinne sowohl Ammoniak als auch Harnstofflösung oder ein anderes reduzierend wirkendes Mittel und insbesondere das so genannte AdBlue, d.h. eine Harnstofflösung gemäß DIN 70070 verstanden werden.

In solchen Abgassystemen wird Reduktionsmittel wie beispielsweise Harnstofflösung mittels Druckluft in den Abgasstrom eingespritzt und zerstäubt, um ein möglichst feines und gleich verteiltes Aerosol zu bilden. Das Reduktionsmittel dient der selektiven katalytischen Reduktion (englisch: Selective Catalytic Reduction, abgekürzt SCR) in sogenannten SCR-Katalysatoren zur Reduktion der Stickoxydemissionen von Dieselmotoren.

Nach Beendigung der Reduktionsmitteleinspritzung muss die Düse von Rückständen der Reduktionsmittellösung befreit werden, um zu verhindern, dass diese kristallisieren und die Austrittsöffnung der Düse verstopfen.

Hierzu ist es bekannt, eine zusätzliche Druckluftleitung anzuordnen, um die Düse nach Beendigung der Reduktionsmitteleinspritzung mittels Druckluft frei zu blasen.

Nachteilig hierbei ist es, dass eine große Anzahl von Einzelteilen zu montieren und anzuschließen ist, insbesondere eine zusätzliche Druckluftleitung sowie entsprechende Ventile, die anzusteuern sind, um die Düse nach Beendigung der Reduktionsmitteleinspritzung mittels Druckluft frei zu blasen. Infolgedessen ist eine große Anzahl einzelner Teile wie Leitungen und Ventile zu montieren, anzuschließen und im Betrieb anzusteuern.

Ausgehend von diesem Stand der Technik liegt der Erfindung die Aufgabe zugrunde, den Montageaufwand der zu montierenden Komponenten im Abgassystem zu vermindern und somit die Herstellungskosten zu senken. Eine weitere Aufgabe liegt darin, dass in der Produktion des Abgasnachbehandlungsystems weniger Teile zu montieren sind und eine Bauraumoptimierung erreicht wird. Ferner soll ein einfaches und zuverlässiges Betriebsverfahren für eine solche Einspritzdüse bereitgestellt werden, welches ohne zusätzliche Leitungen und Ventile zuverlässig arbeitet.

Diese Aufgabe wird erfindungsgemäß durch eine Einspritzdüse gemäß Anspruch 1 sowie ein Verfahren gemäß Anspruch 10 gelöst. Vorteilhafte Weiterbildungen der Erfindung sind in den Unteransprüchen angegeben.

Besonders vorteilhaft bei der Einspritzdüse zur Einspritzung eines Reduktionsmittels in einem Abgassystem einer Verbrennungskraftmaschine zur selektiven katalytischen Reduktion, insbesondere zur Zerstäubung mittels Druckluft oder Treibgas, wobei die Düse zumindest eine Austrittsöffnung aufweist, ist es, dass die Düse stromauf der Austrittsöffnung ei n veränderliches Volumen aufweist, welches nach Beendigung der Einspritzung der Flüssigkeit vergrößert wird, um Gas aus der Umgebung durch die Austrittsöffnung in die Düse einzuziehen.

Durch die Anordnung eines veränderlichen Volumens in Strömungsrichtung des Reduktionsmittels vor der Austrittsöffnung der Düse wird die Düsenöffnung und der dahinter liegende Kanal nach Beendigung der Reduktionsmitteleinspritzung belüftet und von Reduktionsmittelresten befreit, die anderenfalls auskristallisieren und die Düse verstopfen könnten.

Kern der Erfindung ist somit die Anordnung eines veränderlichen Volumens und dessen Vergrößerung zur Belüftung der Austrittsöffnung und des Strömungskanals der Düse.

Vorzugsweise ist das veränderliche Volumen durch ein lageveränderbares Insbesondere flexibles Element, insbesondere eine Membran, einen Kolben, einen federbelasteten Kolben oder dergleichen, begrenzt, welches aus seiner Ruhelage ausgelenkt werden kann, um das veränderliche Volumen zu verkleinern und Rückstellkräfte besitzt, um selbsttätig in seine Ruhelage zurückzukehren, um das veränderliche Volumen zu vergrößern. Vorzugsweise ist das veränderliche Volumen durch ein flexibles Element begrenzt, welches während der Einspritzung der Flüssigkeit aus seiner Ruhelage ausgelenkt wird, um das veränderliche Volumen zu verkleinern, wobei nach Beendigung der Einspritzung der Flüssigkeit das flexible Element in seine Ruhelage zurückkehrt und das veränderliche Volumen vergrößert.

Durch seine Rückstellkräfte ist das lageveränderbare Element somit in der Lage, reversibel in seine Ruhelage zurück zu kehren, wobei das von dem lageveränderbaren Element begrenzte Volumen, welches stromauf der Düsenaustrittsöffnung angeordnet ist, in der Ruhelage des Elementes größer ist, als bei aus seiner Ruhelage ausgelenktem lageveränderbarem Element.

Da das eingeschlossene Volumen in der Ruhelage des begrenzenden Elementes größer ist als in dessen während des Dosierbetriebes ausgelenkter Position, wird nach Beendigung der Einspritzung des Reduktionsmittels Abgas aus dem Abgasstrang durch die Düsenöffnung in die Düse eingezogen und die Düse automatisch belüftet und von Reduktionsmittel befreit.

Aufgrund seiner Rückstellkräfte kehrt dabei das das veränderliche Volumen begrenzende lageveränderliche Element in seine Ruhelage zurück und vergrößert hierdurch das veränderliche Volumen entsprechend.

Besonders bevorzugt ist das veränderliche Volumen durch ein flexibles Element begrenzt, welches während der Einspritzung der Flüssigkeit mittels Druckluft, die zur Zerstäubung der Flüssigkeit dient, beaufschlagt und aus seiner Ruhelage ausgelenkt wird, um das veränderliche Volumen zu verkleinern.

Durch Verwendung von Druckluft, die der Düse zur Zerstäubung der Reduktionsmittellösung zugeführt wird, ergibt sich eine besonders vorteilhafte Gesamtlösung, da auf die gesonderte Zuführung eines unter Druck stehenden Fluides verzichtet werden kann und die Zuleitungen für Druckluft und Reduktionsmittel in einen kompakten Düsenkörper münden und an diesen angeschlossen werden. Dabei ist in dem Düsenkörper das veränderliche Volumen, welches von einem lageveränderbaren, flexiblen Element begrenzt wird, und stromab des Volumens die Austrittsöffnung für Reduktionsmittel angeordnet, sodass eine kompakte Baueinheit geschaffen wird.

Alternativ oder kumulativ zur Anwendung von Druckluft kann das veränderliche Volumen durch ein flexibles Element begrenzt sein, welches während der Einspritzung der Flüssigkeit mittels eines unter Druck stehenden Fluides der Verbrennungskraftmaschine, insbesondere Öl oder Kraftstoff oder Kühtflüssigkeit, beaufschlagt und aus seiner Ruhelage ausgelenkt wird, um das veränderliche Volumen zu verkleinern.

Zur Druckbeaufschlagung des das veränderliche Volumen begrenzende flexiblen Elementes kann jedes unter Druck stehende Fluid zum Einsatz kommen, vorzugsweise eben jene, die bei Betrieb einer Verbrennungskraftmaschine zur Verfügung stehen, wie insbesondere Schmiermittel, Kraftstoff oder Kühlmittel.

In einer bevorzugten Ausführungsform ist das veränderliche Volumen durch ein flexibles Element begrenzt, welches während der Einspritzung der Flüssigkeit elektromagnetisch aus seiner Ruhelage ausgelenkt wird, um das veränderliche Volumen zu verkleinern.

Durch die Verwendung eines Elektromagneten zur Auslenkung des das veränderliche Volumen begrenzende lageveränderbaren Elementes kann kumulativ oder alternativ zur Verwendung eines unter Druck stehenden Fluides eine exakt steuerbare Auslenkung des flexiblen Elementes und damit Einstellung des gewünschten Volumens respektive Herbeiführung der gewünschten Volumenänderung durchgeführt werden.

Besonders bevorzugt liegt die Austrittsöffnung der Düse geodätisch oberhalb des veränderlichen Volumens.

Hierdurch wird ein Nachlaufen der Flüssigkeit zuverlässig verhindert, indem die Düse oberhalb des veränderlichen Volumens angeordnet ist.

Vorzugsweise handelt es sich um eine Zweistoffdüse, bei der die Flüssigkeit mittels Druckluft zerstäubt wird, wobei die Düse zusätzlich zu der Austrittsöffnung für die Flüssigkeit zumindest eine weitere Austrittsöffnung für Druckluft aufweist, insbesondere dass die Austrittsöffnung für Druckluft kreisförmig konzentrisch zur Austrittsöffnung für Flüssigkeit angeordnet ist.

In einer bevorzugten Ausführungsform ist die Düse dergestalt ausgeführt, dass sie als außenmischende Zweistoffdüse ausgestaltet ist. Hierzu weist die Düse in einer besonders bevorzugten Ausführungsform zumindest eine erste Düsenöffnung und eine zweite Düsenöffnung auf, die derart zueinander angeordnet sind, dass ein durch die erste Düsenöffnung austretendes Reduktionsmittel mittels des durch die zweite Düsenöffnung austretenden Treibgases wie Druckluft zerstäubt wird und außerhalb des Düsenkörpers ein homogenes Aerosol gebildet wird.

Eine besonders bevorzugte Anordnung der beiden Düsenöffnungen ergibt sich, wenn die zweite Öffnung durch einen Ringspalt gebildet wird, der zur ersten Öffnung konzentrisch angeordnet ist.

Somit ist es möglich, durch die erste Düsenöffnung die zu zerstäubende Flüssigkeit zu leiten und durch den diese erste Düsenöffnung konzentrisch umgebenden Ringspalt die Druckluft oder das Treibgas zu leiten, so dass bei Ausdüsen der Flüssigkeit durch die Druckluft bzw. das Treibgas die Flüssigkeit zerstäubt und somit das benötigte Aerosol gebildet wird. Hierzu werden die beiden Stoffe, Reduktionsmittellösung und Druckluft/Treibgas auf getrennten Wegen der Düse zugeführt. Da neben Druckluft auch jedes andere Treibgas zur Zerstäubung der Flüssigkeit einsetzbar ist, wird Druckluft in diesem Sinne als Synonym für jedes beliebige Treibgas verwendet.

Als zu zerstäubendes Reduktionsmittel kommt vorzugsweise Harnstofflösung insbesondere gemäß DIN 70070 zur selektiven katalytischen Reduktion zum Einsatz. Das Grundprinzip der Düse in dieser besonders bevorzugten Ausführungsform ist somit eine Aerosolbildung außerhalb der Düse.

Die Einspritzdüse kann einteilig ausgeführt sein. Hierzu kann die Düse mittels des Metallpulverspritzgießverfahrens hergestellt werden. Dabei werden die benötigten Hohlräume beim Spritzen des Bauteils durch ein oder mehrere Kunststoffkörper gebildet, wobei diese Kunststoffkörper beim nachfolgenden Entbindern verdampfen.

In einer alternativen Ausführungsform ist die Düse mehrteilig ausgeführt.

Vorzugsweise ist die Düse zweiteilig oder mehrteilig ausgeführt, wobei ein erstes Bauteil eine erste Düsenöffnung aufweist, und ein zweites Bauteil das erste Bauteil zumindest teilweise umgibt, sodass eine zweite Düsenöffnung zwischen dem ersten und dem zweiten Bauteil gebildet wird.

Durch diese Ausgestaltung, in dem das zweite Bauteil das erste Bauteil zumindest teilweise umgibt oder umgreift, kann gleichzeitig zwischen den beiden Bauteilen der die zweite Öffnung bildende Ringspalt ausgebildet werden, der die erste Düsenöffnung konzentrisch umgreift, d.h. einen zur ersten kreisförmigen Düsenöffnung konzentrischen Ring bildet.

Anstelle eines konzentrischen Ringes können auch mehrere einzelne kleine Öffnungen die erste Düsenöffnung umgeben, wobei über die Mehrzahl zweiter Öffnungen die Druckluft oder das Treibgas ausgeleitet wird, um die aus der ersten Düsenöffnung austretende Flüssigkeit zu zerstäuben und das benötigte Aerosol zu bilden.

Bei einer mehrteiligen Ausführung der Düse können die Bauteile miteinander verklebt sein.

Vorzugsweise weist die Düse außenseitig, d.h. insbesondere in Richtung auf den Abgasstrom, im eingebauten Zustand eine thermische Isolationsschicht auf. Insbesondere kann die Düse eine keramische Beschichtung aufweisen. Hierdurch ist die Düse auf effektive Weise gegen Hitze, wie sie im Abgasstrang eines Verbrennungsmotors auftritt, geschützt.

Besonders bevorzugt ist das veränderliche Volumen stromauf der Austrittsöffnung der Düse in eine Flüssigkeitsleitung oder in den Düsenkörper integriert.

Das veränderliche Volumen kann somit innerhalb einer Gesamtanordnung stromauf des Düsenkörpers in eine Flüssigkeitszuleitung zur Düse hin integriert sein und ein Bauteil bilden, welches dann lediglich an die Druckseite einer Dosierpumpe sowie an die Düse anzuschließen ist. Das veränderliche Volumen kann in den Düsenkörper und/oder in das Leitungspaket integriert sein.

Bei einer Integration des veränderlichen Volumens in den Düsenkörper der Düse ergibt sich eine sehr kompakte Baueinheit, die dann lediglich über eine Flüssigkeitsleitung an die Druckseite der Dosierpumpe der Abgasnachbehandlungseinheit anzuschließen ist. Sofern zur Zerstäubung des Reduktionsmittels Druckluft verwendet wird, genügt es, die Druckluftleitung ebenfalls an diese kompakte Baueinheit anzuschließen.

Hierdurch vereinfacht sich die Montage des Systems und es ist ein zuverlässiger Betrieb mit einer automatischen Belüftung der Düse nach Beendigung der Reduktionsmitteleinspritzung gewährleistet.

Besonders vorteilhaft bei dem Verfahren zum Betrieb eines Abgasnachbehandlungssystems mit einer Einspritzdüse mit zumindest einer Austrittsöffnung zur Einspritzung eines Reduktionsmittels in einen Abgasstrom einer Verbrennungskraftmaschine zur selektiven katalytischen Reduktion ist es, dass nach Beendigung der Einspritzung ein stromauf der Austrittsöffnung angeordnetes veränderliches Volumen vergrößert wird, sodass Gas aus der Umgebung durch die Austrittsöffnung in die Düse eingezogen wird und das Reduktionsmittel zurückdrängt.

Hierdurch wird die Düse nach Beendigung der Reduktionsmitteleinspritzung automatisch belüftet. Es wird Reduktionsmittel aus der Düse entfernt, sodass eine Kristallisation des Reduktionsmittels und eine Verstopfung der Düse zuverlässig unterbunden werden. Eine Wiederinbetriebnahme des Abgasnachbehandlungssystems mit der Düse zur Einspritzung von Reduktionsmittel zur selektiven katalytischen Reduktion bei einer Verbrennungskraftmaschine ist damit jederzeit gewährleistet.

In einer besonders bevorzugten Ausführungsform wird das veränderliche Volumen während der Einspritzung verkleinert, indem ein das veränderliche Volumen begrenzendes flexibles Element, insbesondere eine Membran oder ein federbelasteter Kolben oder dergleichen, mittels Druckluft, die zur Zerstäubung des Reduktionsmittels dient, beaufschlagt und aus seiner Ruhelage ausgelenkt wird, wobei nach Beendigung der Einspritzung des Reduktionsmittels die Druckluftbeaufschlagung beendet wird und das flexible Element aufgrund seiner Rückstellkräfte reversibel in seine Ruhelage zurückkehrt und das veränderliche Volumen vergrößert.

Ein Ausführungsbeispiel der erfindungsgemäßen Einspritzdüse ist in der Figur dargestellt und wird nachfolgend näher erläutert. Es zeigt:

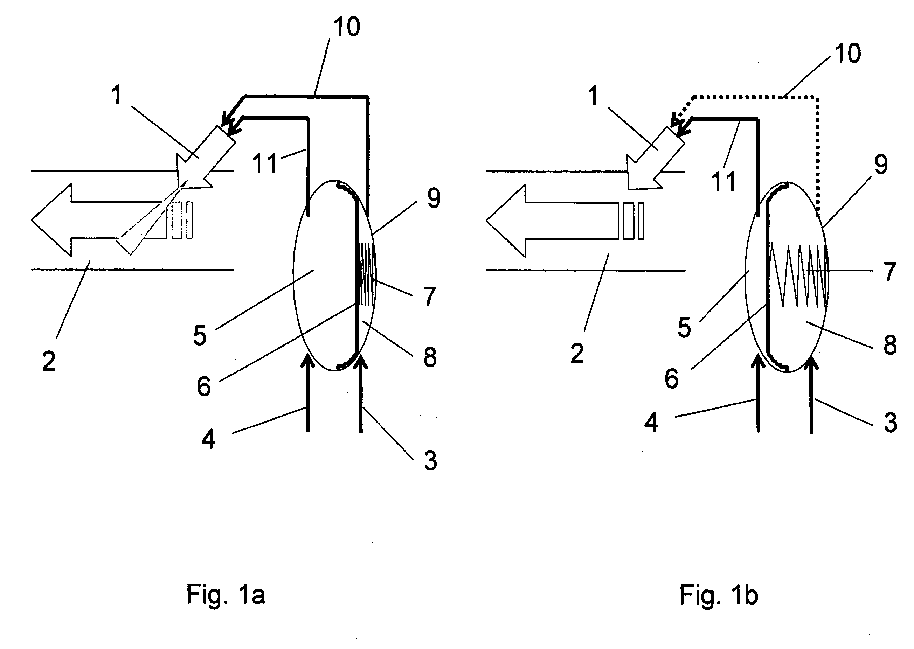

- Figur 1a:: Eine schematische Darstellung einer Einspritzdüse mit minimiertem veränderlichem Volumen während des Betriebes;
- Figur 1b:: eine schematische Darstellung der Einspritzdüse mit maximiertem veränderlichem Volumen nach Beendigung des Betriebes.

In Figur 1 a ist eine schematische Darstellung einer Einspritzdüse 1 zur Einspritzung eines Reduktionsmittels in den Abgasstrom 2 einer Verbrennungskraftmaschine zur selektiven katalytischen Reduktion während des Betriebes dargestellt.

In Figur 1b ist dieselbe Anordnung nach Beendigung der Einspritzung des Reduktionsmittels dargestellt.

Während des Betriebes, d.h. während der Einspritzung des Reduktionsmittels über die außenmischende Zweistoffdüse 1 in den Abgastrakt 2 einer Verbrennungskraftmaschine zur selektiven katalytischen Reduktion wird der Düse 1 über die Zuleitung 3 eine Reduktionsmittellösung aus einem nicht dargestellten Tank mittels einer Dosierpumpe zugeführt. Das Reduktionsmittel wird beim Austritt aus der Düse 1 mittels Druckluft, die über die Zuleitung 4 zugeführt wird, zerstäubt.

In das Leitungssystem 3, 4 der Anordnung gemäß Figur 1, ist ein Gehäuse 9 integriert, welches durch eine flexible und mittels einer Feder 7 vorgespannte Membran 6 in zwei veränderliche Volumina 5, 8 unterteilt ist.

Über die linke Seite 5 innerhalb des Gehäuses 9 wird die über die Zuleitung 4 zugeführte Druckluft weiter über die Leitung 11 der Düse 1 zur Zerstäubung der Reduktionsmittellösung zugeführt.

Über die rechte Seite 8 des mittels der Membran 6 getrennten Gehäuses 9 wird die über die Zuleitung 3 zugeführte Reduktionsmittellösung weiter zur Leitung 10 und ferner zur Düse 1 zur Einspritzung in den Abgastrakt 2 weiter geleitet.

Während des Einspritzbetriebes, wie in Figur 1a dargestellt, ist die Membran 6 aus ihrer Ruhelage aufgrund des anliegenden Luftdruckes in der Kammer 5 gegen die Kraft der Rückstellfeder 7 aus ihrer Ruhelage ausgelenkt. Während des Betriebes ist aufgrund des in der Kammer 5 anliegenden Luftdruckes die Kammer 5 vergrößert und die Kammer 8 innerhalb des Gehäuses 9 verkleinert.

Zur Auslenkung der Membran 6 gegen die Federkraft der Rückstellfeder 7 wird somit der Druck der Luftdruck verwendet, die ohnehin über die Leitung 4, die Kammer 5 und die Leitung 11 der Düse 1 zugeführt wird, um das Reduktionsmittel beim Austritt aus der Düse 1 im Abgastrakt 2 zu zerstäuben und ein Aerosol zu bilden.

Die Rückstellfeder 7 in Kombination mit der flexiblen Membran 6 ist dabei so ausgelegt, dass in der Kammer 8 eine Pulsationsdämpfung der Druckstöße aufgrund des jeweiligen Förderhubs der an der Zuleitung 3 angeschlossenen Dosierpumpe erfolgt, d.h. dass Druckspitzen abgefangen werden, sodass sich bei dem über die Leitung 10 zur Düse 1 weiter geleitete Reduktionsmittel ein gleichmäßiges Spraybild im Abgastrakt 2 ergibt.

In Figur 1b ist dargestellt die Situation nach Abschaltung der Einspritzung. Mit Abschaltung der Förderung des Reduktionsmittels über die Zuleitung 3 wird ebenfalls die Einleitung von Druckluft über die Zuleitung 4 in die Kammer 5 abgeschaltet, d.h. dass nunmehr in der Kammer 5 kein Überdruck mehr anliegt. Dies führt dazu, dass aufgrund der Federkraft der Feder 7 die das Gehäuse 9 in die beiden Kammern 5 und 8 trennende Membran 6 infolge der Rückstellkraft in ihre Ruheposition wandert, was zu einer Verkleinerung der Kammer 5 und zu einer entsprechenden Vergrößerung der Kammer 8 in dem Gehäuse 9 führt. Da die Düse 1 und die dahinter liegende Zuleitung 10 zum Abgastrakt 2 hin offen ist, führt die Vergrößerung des veränderlichen Volumens 8 dazu, dass durch die Düse 1 Abgas aus dem Abgastrakt 2 eingezogen wird und die Düse 1 sowie die der Leitungsabschnitt 10 von Reduktionsmittel befreit wird und durch das Einsaugen von Abgas aus dem Abgastrakt 2 entlüftet wird, wie dies durch die gestrichelte Darstellung des Leitungsabschnittes 10 angedeutet ist.

Durch Abschalten der Druckluft und dem Zurückstellen der Membran 6 aufgrund der Federkraft der Feder 7 in die Ruheposition wird somit nach Beendigung der Einspritzung des Reduktionsmittels die Düse 1 und die Zuleitung 10 zur Düse automatisch entlüftet, um Ablagerungen zu vermeiden. Hierdurch ist gewährleistet, dass die Reduktionsmltteleinspritzanordnung jederzeit wieder in Betrieb genommen werden kann, da Ablagerungen zuverlässig vermieden werden.

Bei Wiederinbetriebnahme stellt sich erneut die Situation gemäß Figur 1a ein, da dann neben der Reduktionsmittelpumpe, mittels derer das Reduktionsmittel über die Leitung 3 zugeführt wird, auch Druckluft auf die Zuleitung 4 gegeben wird, sodass in der Kammer 5 wiederum der Druck der Druckluft auf der Membran 6 liegt und diese aus ihrer Ruhelage auslenkt und das veränderliche Volumen 8 auf der reduktionsmittelführenden Seite der Membran 6 entsprechend verkleinert.

## Patentansprüche

1. Einspritzdüse (1) zur Einspritzung eines Reduktionsmittels in einem Abgassystem (2) einer Verbrennungskraftmaschine zur selektiven katalytischen Reduktion, insbesondere zur Zerstäubung mittels Druckluft oder Treibgas, wobei die Düse (1) zumindest eine Austrittsöffnung aufweist, **dadurch gekennzeichnet, dass** die Düse (1) stromauf der Austrittsöffnung ein veränderliches Volumen (8) aufweist, welches nach Beendigung der Einspritzung der Flüssigkeit vergrößert wird, um Gas aus der Umgebung (2) durch die Austrittsöffnung in die Düse (1) einzuziehen, wobei das veränderliche Volumen (8) durch ein lageveränderbares insbesondere flexibles Element (6), insbesondere eine Membran, einen Kolben, einen federbelasteten Kolben oder dergleichen, begrenzt ist, welches aus seiner Ruhelage ausgelenkt werden kann, um das veränderliche Volumen (8) zu verkleinern und Rückstellkräfte besitzt, um selbsttätig in seine Ruhelage zurückzukehren, um das veränderliche Volumen (8) zu vergrößern.

2. Düse (1) nach Anspruch 1, **dadurch gekennzeichnet, dass** das veränderliche Volumen (8) durch ein flexibles Element (6) begrenzt ist, welches während der Einspritzung der Flüssigkeit aus seiner Ruhelage ausgelenkt wird, um das veränderliche Volumen (8) zu verkleinern, wobei nach Beendigung der Einspritzung der Flüssigkeit das flexible Element (6) in seine Ruhelage zurückkehrt und das veränderliche Volumen (8) vergrößert.

3. Düse (1) nach Anspruch 1 oder 2, **dadurch gekennzeichnet, dass** das veränderliche Volumen (8) durch ein flexibles Element begrenzt ist, welches während der Einspritzung der Flüssigkeit mittels Druckluft, die zur Zerstäubung der Flüssigkeit dient, beaufschlagt und aus seiner Ruhelage ausgelenkt wird, um das veränderliche Volumen (8) zu verkleinern.

4. Düse (1) nach einem der vorherigen Ansprüche, **dadurch gekennzeichnet, dass** das veränderliche Volumen (8) durch ein flexibles Element begrenzt ist, welches während der Einspritzung der Flüssigkeit mittels eines unter Druck stehenden Fluides der Verbrennungskraftmaschine, insbesondere Schmierstoff oder Kraftstoff oder Kühlflüssigkeit, beaufschlagt und aus seiner Ruhelage ausgelenkt wird, um das veränderliche Volumen (8) zu verkleinern.

5. Düse (1) nach einem der vorherigen Ansprüche, **dadurch gekennzeichnet, dass** das veränderliche Volumen (8) durch ein flexibles Element begrenzt ist, welches während der Einspritzung der Flüssigkeit elektromagnetisch aus seiner Ruhelage ausgelenkt wird, um das veränderliche Volumen (8) zu verkleinern.

6. Düse (1) nach einem der vorherigen Ansprüche, **dadurch gekennzeichnet, dass** die Austrittsöffnung geodätisch oberhalb des veränderlichen Volumens (8) liegt.

7. Düse (1) nach einem der vorherigen Ansprüche, **dadurch gekennzeichnet, dass** es sich um eine Zweistoffdüse handelt, bei der die Flüssigkeit mittels Druckluft zerstäubt wird, wobei die Düse zusätzlich zu der Austrittsöffnung für die Flüssigkeit zumindest eine weitere Austrittsöffnung für Druckluft aufweist, insbesondere dass die Austrittsöffnung für Druckluft kreisförmig konzentrisch zur Austrittsöffnung für Flüssigkeit angeordnet ist.

8. Düse (1) nach einem der vorherigen Ansprüche, **dadurch gekennzeichnet, dass** das veränderliche Volumen (8) stromauf der Austrittsöffnung der Düse in eine Flüssigkeitsleitung (3, 10) oder in den Düsenkörper integriert ist.

9. Verfahren zum Betrieb eines Abgasnachbehandlungssystems mit einer Einspritzdüse (1) mit zumindest einer Austrittsöffnung zur Einspritzung eines Reduktionsmittels in einen Abgasstrom (2) einer Verbrennungskraftmaschine zur selektiven katalytischen Reduktion, **dadurch gekennzeichnet, dass** nach Beendigung der Einspritzung ein stromauf der Austrittsöffnung angeordnetes veränderliches Volumen (8) vergrößert wird, sodass Gas aus der Umgebung (2) durch die Austrittsöffnung in die Düse (1) eingezogen wird und das Reduktionsmittel zurückdrängt, wobei das veränderliche Volumen (8) während der Einspritzung verkleinert wird, indem ein das veränderliche Volumen (8) begrenzendes flexibles Element (6), insbesondere eine Membran oder ein federbelasteter Kolben oder dergleichen, mittels Druckluft, die zur Zerstäubung des Reduktionsmittels dient, beaufschlagt und aus seiner Ruhelage ausgelenkt wird, wobei nach Beendigung der Einspritzung des Reduktionsmittels die Druckluftbeaufschlagung beendet wird und das flexible Element (6) aufgrund seiner Rückstellkräfte reversibel in seine Ruhelage zurückkehrt und das veränderliche Volumen (8) vergrößert.

## Claims

1. Injection nozzle (1) for injecting a reducing agent in an exhaust gas system (2) of a combustion engine for selective catalytic reduction, in particular for atomisation by means of compressed air or fuel gas, the nozzle (1) having at least one outlet opening, **characterised in that** the nozzle (1) has a variable volume (8) upstream of the outlet opening, which volume is increased after completion of the fluid injection in order to draw gas from the surroundings (2) into the nozzle (1) via the outlet opening, the variable volume (8) being delimited by an element (6) which can change position, in particular a flexible element, in particular a membrane, a piston, a spring-loaded piston or the like, which element can be deflected from its rest position in order to reduce the variable volume (8) and has restoring forces in order to return automatically to its rest position to increase the variable volume (8).

2. Nozzle (1) according to claim 1, **characterised in that** the variable volume (8) is delimited by a flexible element (6) which is deflected from its rest position during the fluid injection in order to reduce the variable volume (8), the flexible element (6) returning to its rest position and increasing the variable volume (8) after completion of the fluid injection.

3. Nozzle (1) according to either claim 1 or claim 2, **characterised in that** the variable volume (8) is delimited by a flexible element which, during the fluid injection, is loaded and deflected from its rest position by means of compressed air which is used to atomise the fluid, in order to reduce the variable volume (8).

4. Nozzle (1) according to any of the preceding claims, **characterised in that** the variable volume (8) is delimited by a flexible element which, during the fluid injection, is loaded and deflected from its rest position by means of a pressurised fluid of the combustion engine, in particular lubricant, fuel or coolant, in order to reduce the variable volume (8).

5. Nozzle (1) according to any of the preceding claims, **characterised in that** the variable volume (8) is delimited by a flexible element which is electromagnetically deflected from its rest position during the fluid injection in order to reduce the variable volume (8).

6. Nozzle (1) according to any of the preceding claims, **characterised in that** the outlet opening is geodetically above the variable volume (8).

7. Nozzle (1) according to any of the preceding claims, **characterised in that** it is a two-fluid nozzle in which the fluid is atomised by means of compressed air, the nozzle comprising at least one further outlet opening for compressed air in addition to the outlet opening for the fluid, in particular **in that** the outlet opening for compressed air is arranged as a circle concentrically with the outlet opening for fluid.

8. Nozzle (1) according to any of the preceding claims, **characterised in that** the variable volume (8) is integrated, upstream of the outlet opening of the nozzle, in a fluid line (3, 10) or in the nozzle body.

9. Method for operating an exhaust gas treatment system comprising an injection nozzle (1) having at least one outlet opening for injecting a reducing agent into an exhaust gas flow (2) of a combustion engine for selective catalytic reduction, **characterised in that**, after completion of the injection, a variable volume (8) arranged upstream of the outlet opening is increased so that gas from the surroundings (2) is drawn into the nozzle (1) via the outlet opening and pushes back the reducing agent, the variable volume (8) being reduced during the injection by loading a flexible element (6), in particular a membrane or a spring-loaded piston or the like, delimiting the variable volume (8), and deflecting said element from its rest position by means of compressed air which is used to atomise the reducing agent, the loading by compressed air ending after completion of the injection of the reducing agent, and the flexible element (6) reversibly returning to its rest position on account of its restoring forces and increasing the variable volume (8).

## Revendications

1. Buse d'injection (1) pour l'injection d'un agent de réduction dans un système de gaz d'échappement (2) d'un moteur à combustion interne pour effectuer la réduction catalytique sélective, en particulier pour l'atomisation au moyen d'air comprimé ou de gaz propulseur, dans laquelle la buse (1) présente au moins une ouverture de sortie, **caractérisée en ce que** la buse (1) présente en amont de l'ouverture de sortie un volume variable (8) qui se dilate à la fin de l'injection du liquide pour acheminer dans la buse (1) du gaz venant de l'environnement (2) à travers l'ouverture de sortie, dans laquelle le volume variable (8) est délimité par un élément à position variable, en particulier un élément souple (6), notamment une membrane, un piston, un piston sollicité par un ressort ou analogue, qui peut être dévié(e) de sa position de repos pour réduire le volume variable (8) et possède des forces de rappel pour revenir automatiquement dans sa position de repos afin de dilater le volume variable (8).

2. Buse (1) selon la revendication 1, **caractérisée en ce que** le volume variable (8) est délimité par un élément souple (6) qui est dévié de sa position de repos pendant l'injection du liquide afin de réduire le volume variable (8), dans laquelle, à la fin de l'injection du liquide, l'élément souple (6) est renvoyé dans sa position de repos et le volume variable (8) se dilate.

3. Buse (1) selon la revendication 1 ou la revendication 2, **caractérisée en ce que** le volume variable (8) est délimité par un élément souple qui achemine, pendant l'injection du liquide, de l'air comprimé qui sert à atomiser le liquide et est dévié de sa position de repos pour réduire le volume variable (8).

4. Buse (1) selon l'une quelconque des revendications précédentes, **caractérisée en ce que** le volume variable (8) est délimité par un élément souple qui achemine, au cours de l'injection du liquide, un fluide sous pression au moteur à combustion interne, en particulier du lubrifiant ou du carburant ou un liquide réfrigérant et est dévié de sa position de repos pour réduire le volume variable (8).

5. Buse (1) selon l'une quelconque des revendications précédentes, **caractérisée en ce que** le volume variable (8) est délimité par un élément souple qui est dévié par voie électromagnétique de sa position de repos au cours de l'injection du liquide afin de réduire le volume variable (8).

6. Buse (1) selon l'une quelconque des revendications précédentes, **caractérisée en ce que** l'ouverture de sortie se situe géodésiquement au-dessus du volume variable (8).

7. Buse (1) selon l'une quelconque des revendications précédentes, **caractérisée en ce qu'**il s'agit d'une buse à deux composants, dans laquelle le liquide est atomisé à l'aide d'air comprimé, dans laquelle la buse présente en plus de l'ouverture de sortie pour le liquide au moins une autre ouverture de sortie pour de l'air comprimé, en particulier **en ce que** l'ouverture de sortie pour l'air comprimé est ménagée en forme de cercle concentriquement par rapport à l'ouverture de sortie pour le liquide.

8. Buse (1) selon l'une quelconque des revendications précédentes, **caractérisée en ce que** le volume variable (8) est intégré en amont de l'ouverture de sortie de la buse à une conduite de liquide (3, 10) ou au corps de buse.

9. Procédé de commande d'un système de post-traitement de gaz d'échappement avec une buse d'injection (1) ayant au moins une ouverture de sortie pour injecter un agent de réduction dans le courant de gaz d'échappement (2) d'un moteur à combustion interne afin d'assurer une réduction catalytique sélective, **caractérisé en ce que**, à la fin de l'injection, un volume variable (8) ménagé en amont de l'ouverture de sortie est dilatée de sorte que du gaz provenant de l'environnement (2) soit aspiré à travers l'ouverture de sortie dans la buse (1) et refoule l'agent de réduction, dans lequel le volume variable (8) est réduit au cours de l'injection en acheminant un élément souple (6) délimitant le volume variable (8), en particulier une membrane ou un piston sollicité par un ressort ou similaire au moyen d'air comprimé qui sert à atomiser l'agent de réduction et est dévié de sa position de repos, dans lequel, à la fin de l'injection de l'agent de réduction, l'acheminement d'air comprimé est terminé et l'élément souple (6) est ramené en raison de ses forces de rappel de manière réversible dans sa position de repos, ce qui a pour effet de dilater le volume variable (8).
